# EUROPÄISCHE PATENTANMELDUNG

(11) **EP 1 649 970 A1**
(43) Veröffentlichungstag der Anmeldung: **26.04.2006**
(21) Anmeldenummer: 04025354.4
(22) Anmeldetag: 25.10.2004
(51) Int. Cl.: B23P 15/04, B23P 6/00, B23K 15/00, F01D 5/28

(54) **Herstellungsverfahren einer Schaufel aus Titan**

(71) Anmelder: SIEMENS AKTIENGESELLSCHAFT, 80333 München (DE)
(72) Erfinder: Walter, David, 45481 Mülheim (DE); von der Crone, Ulrich, Dr., 47447 Moers (DE)

(57) **Zusammenfassung**

Bei einem Herstellungs- bzw. Reparaturverfahren einer Schaufel (1, 2, 3) aus Alpha-Beta-Titan wird erfindungsgemäß insbesondere ein Einsatz (3) aus Beta-Titan an einem Schaufelblatt (2) mit Aufmaß angeschweißt. Ferner ist bevorzugt auch der Einsatz (3) selbst zunächst mit Aufmaß gestaltet und die Endmaße der Schaufel (1, 2, 3) werden erst bei einer mechanischen Nachbearbeitung hergestellt. Schließlich wird bevorzugt der Einsatz (3) nach seinem Verschweißen mit dem Schaufelblatt (2) der Schaufel (1) gehärtet.

## Beschreibung

Die Erfindung betrifft ein Herstellungsverfahren einer Schaufel, wie sie beispielsweise bei Dampfturbinen in Niederdruckbauweise Verwendung finden, welche aus Alpha-Beta-Titan mit einem Einsatz aus Beta-Titan gestaltet ist. Ferner betrifft die Erfindung ein Reparaturverfahren für eine derartige Schaufel.

Schaufeln der eingangs genannten Art werden während des Betriebs einer Dampfturbine stark beansprucht und können beispielsweise durch Tropfenschlagerosion geschädigt werden. Als Schutzmaßnahme ist es bekannt Eintrittskanten der Schaufeln zu härten, erosionsresistente Schichten an den Eintrittskanten aufzubringen oder ein erosionsbeständiges Material an der Eintrittskante anzubringen. Es ist ferner beispielsweise aus EP 0 780 187 B1 bekannt, an einer Schaufel aus Ti-6Al-4V eine Eintrittskante aus Beta-Titan anzuschweißen. Mit dem Anschweißen ist jedoch ein Verziehen der Schaufel bedingt, weshalb gemäß EP 0 780 187 B1 an der Eintrittskante ein bereits ausgehärteter Beta-Titan Einsatz unter ganz bestimmten, kontrollierten Bedingungen angeschweißt wird.

Der Erfindung liegt die Aufgabe zugrunde ein Herstellungs- und ein Reparaturverfahren für Schaufeln aus Titan bereitzustellen, welche im Vergleich zu bekannten Verfahren kostengünstiger sind und dennoch zu Schaufeln mit hoher Lebensdauer und hoher Maßgenauigkeit führen.

Die Aufgabe ist erfindungsgemäß mit einem Herstellungsverfahren einer Schaufel aus Alpha-Beta-Titan mit einem Einsatz aus Beta-Titan gelöst, mit den Schritten: Schmieden der Schaufel aus Alpha-Beta-Titan mit Aufmaß, Ausarbeiten eines Bereichs zur Aufnahme eines Einsatzes aus Beta-Titan, Einsetzen und Anschweißen eines zu Beta-Titan umgewandelten bzw. ausgehärteten Beta-Titan (solution treated and aged) Einsatzes und Bearbeiten der Schaufel und gegebenenfalls des Einsatzes auf Endmaß.

Ferner ist die Aufgabe mit einem Herstellungsverfahren einer Schaufel aus Alpha-Beta-Titan mit einem Einsatz aus Beta-Titan gelöst, mit den Schritten: Schmieden der Schaufel aus Alpha-Beta-Titan mit Aufmaß, Ausarbeiten eines Bereichs zur Aufnahme eines Einsatzes aus Beta-Titan, Einsetzen und Anschweißen eines lösungsgeglühten Einsatzes, Wärmebehandlung zur Aushärtung des Einsatzes aus Beta-Titan und Bearbeiten der Schaufel und gegebenenfalls des Einsatzes aus Beta-Titan auf Endmaß.

Der Kern der oben genannten erfindungsgemäßen Herstellungsverfahren liegt darin, dass die Schaufel aus Alpha-Beta-Titan grundsätzlich mit Aufmaß geschmiedet wird. Erst nachfolgend wird mechanisch nachbearbeitet, wodurch dann erfindungsgemäß ein Verzug, welcher beispielsweise beim Anschweißen des Einsatzes aufgetreten ist, ausgeglichen werden kann. Die erfindungsgemäße Schaufel kann auf diese Weise auf ihre vorzusehende Endkontur bearbeitet werden, da aufgrund des Aufmasses genug Material zum Ausgleich des Verzugs vorhanden ist.

Ein weiteres erfindungsgemäßes Herstellungsverfahren einer Schaufel aus Alpha-Beta-Titan mit einem Einsatz aus Beta-Titan ist durch die folgenden Schritte gekennzeichnet: Schmieden der Schaufel aus Alpha-Beta-Titan mit Endmaß, Ausarbeiten eines Bereichs zur Aufnahme eines Einsatzes aus Beta-Titan, Einsetzen und Anschweißen eines lösungsgeglühten Einsatzes und schließlich Wärmebehandlung zur Aushärtung des Einsatzes aus Beta-Titan.

Bei einem derartigen erfindungsgemäßen Herstellungsverfahren kann das Endmaß der Schaufel durch einen Richtvorgang erfolgen, bei dem allein ein möglicher Verzug während des Anschweißens und der nachfolgenden Wärmebehandlung ausgeglichen werden muss. Ein möglicher Verzug am Einsatz, der während des Lösungsglühvorgangs entstehen kann, kann hingegen bereits vor dem Anschweißen ausgeglichen werden, so dass die Bauteile beim Schweißen präzise aneinander liegen und durch das Lösungsglühen nur geringe Spannungen zwischen dem Einsatz und der restlichen Schaufel entstehen können.

Für einen dauerhaften Schutz von betriebsbeanspruchten Schaufeln aus Alpha-Beta-Titan mit einem Einsatz aus Beta-Titan wird erfindungsgemäß ein Reparaturverfahren mit den folgenden Schritten vorgeschlagen: Bereitstellen einer zu reparierenden Schaufel aus Alpha-Beta-Titan mit Endmaß, Ausarbeiten eines Bereichs zur Aufnahme eines Einsatzes aus Beta-Titan, Einsetzten und Anschweißen eines lösungsgelühten Einsatzes und Wärmebehandeln zur Aushärtung des Einsatzes aus Beta-Titan.

Dieses erfindungsgemäße Reparaturverfahren weist ebenfalls den oben genannten Vorteil auf, dass bei einem Richtvorgang an der Schaufel lediglich ein möglicher Verzug während des Anschweißens und der nachfolgenden Wärmebehandlung des Einsatzes ausgeglichen werden muss. Ein möglicher Verzug beim Lösungsglühen des Einsatzes kann hingegen bereits vor dem Einsetzen und Anschweißen des Einsatzes beispielsweise durch Richten ausgeglichen werden.

Bei allen oben genannten erfindungsgemäßen Verfahren ist es besonders vorteilhaft, wenn dabei ein Einsatz mit Aufmaß an der vorbereiteten Schaufel eingesetzt und angeschweißt wird. Ein derartiger Einsatz kann zusammen mit der Schweißnaht und gegebenenfalls der ebenfalls mit Aufmaß gestalteten Schaufel in einem nachfolgenden maschinellen Bearbeitungsprozess auf Endmaß gebracht und damit ein möglicher Verzug des Einsatzes und der Schaufel besonders präzise ausgeglichen werden. Eine derartige mechanische Nachbearbeitung des Einsatzes und/oder der Schaufel sollte bei den oben genannten erfindungsgemäßen Verfahren insbesondere als letzter Arbeitsgang durchgeführt werden.

Nachfolgend werden Ausführungsbeispiele erfindungsgemäßer Herstellungs- und Reparaturverfahren anhand der beigefügten schematischen Zeichnungen näher erläutert. Es zeigt:
Fig. 1 einen Querschnitt einer Schaufel, die gemäß dem erfindungsgemäßen Herstellungs- oder Reparaturverfahren bearbeitet worden ist,
Fig. 2 ein Ablaufdiagramm eines ersten Ausführungsbeispiels eines erfindungsgemäßen Herstellungsverfahrens,
Fig. 3 ein Ablaufdiagramm eines zweiten Ausführungsbeispiels eines erfindungsgemäßen Herstellungsverfahrens,
Fig. 4 ein Ablaufdiagramm eines dritten Ausführungsbeispiels eines erfindungsgemäßen Herstellungsverfahrens und
Fig. 5 ein Ablaufdiagramm eines Ausführungsbeispiels eines erfindungsgemäßen Reparaturverfahrens.

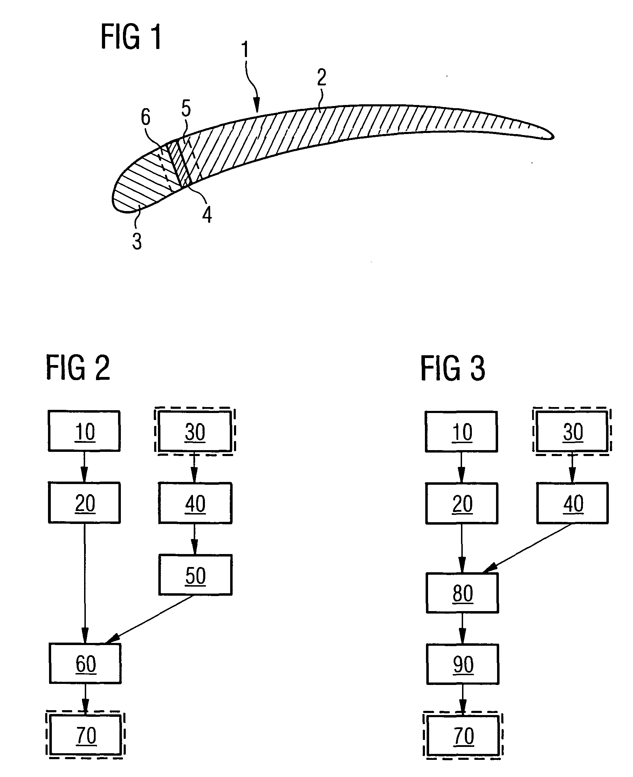

In Fig. 1 ist eine Schaufel 1 dargestellt, bei der an einem Schaufelblatt 2 aus Alpha-Beta-Titan an einer Vorderkante zumindest abschnittsweise ein Einsatz 3 aus Beta-Titan angebracht ist. Der Einsatz 3 ist mit Hilfe einer Schweißnaht 4 mit dem Schaufelblatt 2 verbunden. Beim Ausbilden dieser Schweißnaht 4 werden insbesondere Bereich 5 und 6 am Schaufelblatt 2 bzw. am Einsatz 3 besonders stark aufgeheizt, so dass es zu temperaturbedingten Spannungen und gegebenenfalls zu einem Verzug der Schaufel 1 kommen kann. Darüber hinaus wird die Schaufel 1 und deren Schaufelblatt 2 sowie deren Einsatz 3 während Herstellungs- und Reparaturverfahren Temperaturzyklen unterworfen, welche zum Ausbilden der gewünschten Korrosionsbeständigkeit und Wärmebefestigkeit des Titanmaterials erforderlich sind. Bedingt durch diese Temperaturzyklen können sich an der Schaufel 1 ebenfalls Verformungen und Verzug ergeben.

Für einen nachfolgenden Gebrauch der Schaufel in einer Dampfturbine ist es hingegen unerlässlich, dass diese bezüglich der gewünschten Endmaße eine hohe Maßgenauigkeit aufweist. Die oben genannten Verformungen und ein möglicher Verzug muss daher während der Herstellungs- und Reparaturverfahren der Schaufel 1 mit geeigneten Mitteln ausgeglichen werden.

In Fig. 2 ist ein Herstellungsverfahren einer Schaufel 1 dargestellt, bei dem zunächst das Schaufelblatt 2 in einem Schritt 10 mit Aufmaß geschmiedet und dann in einem Schritt 20 ein Bereich zur Aufnahme des Einsatzes 3 aus Beta-Titan ausgearbeitet wird. Parallel zu den Schritten 10 und 20 wird in einem Schritt 30 ein Einsatz 3 bereitgestellt, der mit oder ohne Aufmaß gestaltet ist. Dieser Einsatz 3 wird in einem Schritt 40 lösungsgeglüht. Beim Lösungsglühen werden alle Ausscheidungen des insbesondere metastabilen Beta-Titan des Einsatzes 3 gelöst. Nachfolgend wird der Einsatz 3 mit einer definierten Geschwindigkeit abgekühlt, so dass eine neuerliche Ausbildung von Ausscheidungen unterdrückt wird. In einem Schritt 50 wird der Einsatz 3 bei dem Herstellungsverfahren gemäß Fig. 2 dann einer Wärmebehandlung unterzogen, bei dem das Material des Einsatzes gehärtet und gealtert wird. Bei der Wärmebehandlung wird der Einsatz 3 insbesondere erhitzt, um eine gesteuerte Umwandlung des Beta-Titans-Materials zu erreichen. Der Einsatz 3 wird beispielsweise auf eine Temperatur zwischen zirka 400° und zirka 600° C aufgeheizt, damit Ausscheidungsteilchen mit vorbestimmter Größe entstehen und sich eine definierte Streckgrenze des Beta-Titan-Materials einstellt.

In einem Schritt 60 werden dann das Schaufelblatt 2 mit Aufmaß und der Einsatz 3, welcher wahlweise mit oder ohne Aufmaß gestaltet ist, miteinander verschweißt.

Bei einem Einsatz 3 ohne Aufmaß wird gegebenenfalls vor dem Verschweißen ein Richtvorgang durchgeführt. Ein derart vorbereiteter Einsatz 3 weist nach dem Verschweißen lediglich den durch das Schweißen im Bereich 6 bedingten Verzug aufgrund von Wärmespannungen auf. Dieser Verzug kann gegebenenfalls durch einen weiteren Richtvorgang am eingeschweißten Einsatz 3 leicht ausgeglichen werden. Das Endmaß der gesamten Schaufel 1 und insbesondere des Schaufelblattes 2 kann dann in einem abschließenden Arbeitsgang innerhalb des Schritts 70 durch eine mechanische Nachbearbeitung und einen entsprechenden Abtrag des Aufmaßes am Schaufelblatt 2 erfolgen. Wenn am Schaufelblatt 2 ein Einsatz 2 mit Aufmaß angeschweißt worden ist, so kann auch an diesem Einsatz 3 das Endmaß mit besonders hoher Maßgenauigkeit durch einen solchen mechanischen Nachbearbeitungsgang hergestellt werden.

In Fig. 3 ist ein Ausführungsbeispiel eines Herstellungsverfahrens dargestellt, bei dem zunächst wiederum ein Schaufelblatt 2 in einem Schritt 10 geschmiedet und mit Aufmaß bereitgestellt wird. An dem Schaufelblatt 2 wird nachfolgend in einem Schritt 20 ein Bereich zum Aufnehmen eines Einsatzes aus Beta-Titan vorbereitet. In Analogie zum Herstellungsverfahren gemäß Fig. 2 wird ferner in einem Schritt 30 ein Einsatz 3 mit oder ohne Aufmaß bereitgestellt, der in einem Schritt 40 lösungsgeglüht wird. Nachfolgend erfolgt jedoch keine Wärmebehandlung des Einsatzes 3 sondern es wird unmittelbar in einem Schritt 80 der lösungsgeglühte Einsatz 3 mit dem Schaufelblatt 2 verschweißt. Nachfolgend wird in einem Schritt 90 der Einsatz 3 zusammen mit dem Schaufelblatt 2 wärmebehandelt, also gehärtet und gealtert.

Als letzter Schritt des Herstellungsverfahrens gemäß Fig. 3 wird in Entsprechung zum Herstellungsverfahren gemäß Fig. 2 in einem Schritt 70 wahlweise der Einsatz 3 auf Endmaß bearbeitet oder sein Endmaß in einem Richtvorgang eingestellt. Das Schaufelblatt 2 wird gegebenenfalls zusammen mit dem Einsatz 3 durch eine mechanische Endbearbeitung auf Endmaß gebracht.

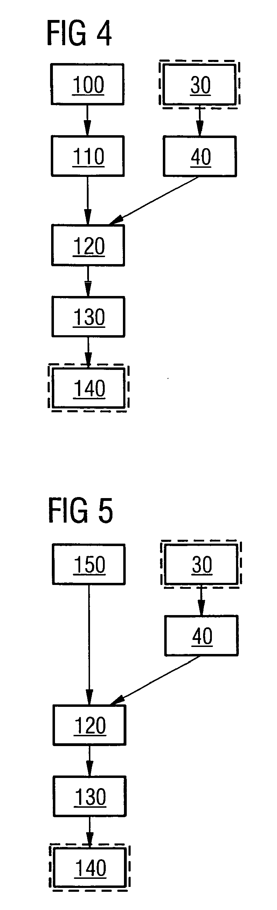

In Fig. 4 ist ein Herstellungsverfahren einer Schaufel 1 dargestellt, bei dem zunächst in einem Schritt 100 ein Schaufelblatt 2 mit Endmaß geschmiedet wird. Das Schaufelblatt 2 wird dann in einem Schritt 110 zum Aufnehmen eines Einsatzes aus Beta-Titan vorbereitet.

Zu einem derart hergestellten Schaufelblatt 2 wird eine Einsatz 3 zugeliefert, der in einem Schritt 30 wahlweise mit oder ohne Aufmaß bereitgestellt und dann in einem Schritt 40 lösungsgeglüht worden ist.

Der Einsatz 3 mit oder ohne Aufmaß wird an dem mit Endmaß gestalteten Schaufelblatt 2 in einem Schritt 120 eingesetzt und angeschweißt. Nachfolgend wird das Schaufelblatt 2 zusammen mit dem Einsatz 3 wärmebehandelt, um den Einsatz 3 in ausgehärtetes Beta-Titan umzuwandeln.

Damit insbesondere der Einsatz 3 mit präzisen Endmaßen versehen werden kann, kann dieser, wenn er zunächst mit Aufmaß verarbeitet worden ist, mechanisch nachbearbeitet werden. Alternativ kann an der Schaufel 1, d.h. sowohl am Schaufelblatt 2 als auch am Einsatz 3 ein Richtvorgang vorgenommen werden, bei dem insbesondere das bereits mit Endmaß gestaltete Schaufelblatt 2 gerichtet wird. Beim Richtvorgang bzw. der mechanischen Nachbearbeitung muss am Einsatz 3 lediglich ein durch das Anschweißen und die Wärmebehandlung bedingter Verzug ausgeglichen werden, weil ansonsten bereits der im Schritt 40 lösungsgeglühte Einsatz 3 vor einem Anschweißen im Schritt 120 ausgerichtet werden konnte.

In Fig. 5 ist ein Reparaturverfahren einer Schaufel 1 dargestellt, bei dem eine reparaturbedürftige Schaufel 1 mit Endmaß und ohne einen Einsatz 3 bereitgestellt wird. An der Schaufel 1 gemäß Fig. 5 wird eine Einsatz 3 angeschweißt, der in Schritten 30 und 40 wahlweise mit oder ohne Aufmaß bereitgestellt und nachfolgend lösungsgeglüht worden ist. Das Anschweißen erfolgt in einem Schritt 120, auf den eine Wärmebehandlung zum Umwandeln des Einsatzes in gehärtetes Beta-Titan in einem Schritt 130 folgt.

Das Reparaturverfahren wird mit einem Schritt 140 abgeschlossen, bei dem ein mit Aufmaß versehener Einsatz 3 nachbearbeitet oder ein mit Endmaß angeschweißter Einsatz 3 gerichtet wird und ferner noch ein Richtvorgang an der restlichen Schaufel bzw. dem Schaufelblatt 2 durchgeführt wird.

Damit die mechanische Nachbearbeitung und das Richten in den Schritten 140 und auch in den Schritten 70 dauerhaft zu den gewünschten Endmaßen der Schaufel 1 führt, ist es vorteilhaft, wenn vor diesen Schritten 70 und 140 jeweils eine Relaxations-Wärmebehandlung erfolgt, bei der das Schaufelblatt 2 zusammen mit dem Einsatz 3 spannungsarm geglüht wird.

## Patentansprüche

1. Herstellungsverfahren einer Schaufel (1, 2, 3) aus Alpha-Beta-Titan mit einem Einsatz (3) aus Beta-Titan, **gekennzeichnet durch** die Schritte:
a) Schmieden der Schaufel (1, 2) aus Alpha-Beta-Titan mit Aufmaß;
b) Ausarbeiten eines Bereichs zur Aufnahme eines Einsatzes (3) aus Beta-Titan;
c) Einsetzen und Anschweißen eines ausgehärteten Beta-Titan Einsatzes (3);
d) Bearbeiten der Schaufel (1, 2, 3) auf Endmaß.

2. Herstellungsverfahren einer Schaufel (1, 2, 3) aus Alpha-Beta-Titan mit einem Einsatz (3) aus Beta-Titan, **gekennzeichnet durch** die Schritte:
a) Schmieden der Schaufel (1, 2) aus Alpha-Beta-Titan mit Aufmaß;
b) Ausarbeiten eines Bereichs zur Aufnahme eines Einsatzes (3)aus Beta-Titan;
c) Einsetzen und Anschweißen eines lösungsgeglühten Einsatzes (3) ;
c1) Wärmebehandeln zur Aushärtung des Einsatzes (3) aus Beta-Titan;
d) Bearbeiten der Schaufel (1, 2, 3) auf Endmaß.

3. Herstellungsverfahren nach Anspruch 1 oder 2, **gekennzeichnet durch** den Schritt:
c2) Spannungsarmglühen der Schaufel (1, 2, 3) vor einem Bearbeiten auf Endmaß.

4. Herstellungsverfahren einer Schaufel (1, 2, 3) aus Alpha-Beta-Titan mit einem Einsatz (3) aus Beta-Titan, **gekennzeichnet durch** die Schritte:
a) Schmieden der Schaufel (1, 2) aus Alpha-Beta-Titan mit Endmaß;
b) Ausarbeiten eines Bereichs zur Aufnahme eines Einsatzes (3)aus Beta-Titan;
c) Einsetzen und Anschweißen eines lösungsgeglühten Einsatzes (3);
c1) Wärmebehandeln zur Aushärtung des Einsatzes (3) aus Beta-Titan.

5. Reparaturverfahren einer Schaufel (1, 2, 3) aus Alpha-Beta-Titan mit einem Einsatz (3) aus Beta-Titan, **gekennzeichnet durch** die Schritte:
a) Bereitstellen einer zu reparierenden Schaufel (1, 2) aus Alpha-Beta-Titan mit Endmaß;
b) Ausarbeiten eines Bereichs zur Aufnahme eines Einsatzes aus Beta-Titan;
c) Einsetzen und Anschweißen eines lösungsgeglühten Einsatzes (3) ;
c1) Wärmebehandeln zur Aushärtung des Einsatzes (3) aus Beta-Titan.

6. Herstellungs- bzw. Reparaturverfahren nach Anspruch 4 oder 5,
**gekennzeichnet durch** den Schritt:
d) Richten der Schaufel (1, 2, 3) zum Ausgleich eines möglichen Verzugs während des Anschweißens und der nachfolgenden Wärmebehandlung.

7. Herstellungs- bzw. Reparaturverfahren nach einem der Ansprüche 1 bis 6,
**dadurch gekennzeichnet, dass** beim Schritt c) ein Einsatz (3) mit Aufmaß eingesetzt und angeschweißt und in einem nachfolgenden Schritt der Einsatz (3) auf Endmaß bearbeitet wird.
